# EUROPÄISCHE PATENTANMELDUNG

(11) **EP 3 646 934 A1**
(43) Veröffentlichungstag der Anmeldung: **06.05.2020**
(21) Anmeldenummer: 18204284.6
(22) Anmeldetag: 05.11.2018
(51) Int. Cl.: B01D 46/52, B01D 46/10, B01D 46/12, B01D 46/24

(54) **FILTERELEMENT MIT GEGENFALTUNG UND KASSETTENFILTER MIT SOLCHEN FILTERELEMENTEN UND FILTERPATRONE MIT EINEM SOLCHEN FILTERELEMENT**

(71) Anmelder: Carl Freudenberg KG, 69469 Weinheim (DE)
(72) Erfinder: TAPPER, Renate, 64625 Bensheim (DE)

(57) **Zusammenfassung**

Die Erfindung betrifft ein Filterelement (10) mit einem gefalteten Filtermedium (1), wobei das Filtermedium (1) plissiert ist. Erfindungsgemäß ist das Filtermedium (1) zusätzlich mindestens mit einer Gegenfaltung (12, 13, 14) versehen.

Die Erfindung betrifft auch einen Kassettenfilter (200) mit solchen Filterelementen und eine Filterpatrone (300) mit einem solchen Filterelement. Durch die Verwendung der Filterelemente kann in vorteilhafter Weise die Filtrationsleistung von Kassettenfiltern und Filterpatronen verbessert werden.

## Beschreibung

Die Erfindung betrifft ein Filterelement mit Gegenfaltung gemäß dem Oberbegriff von Anspruch 1, einen Kassettenfilter mit solchen Filterelementen gemäß Anspruch 9 und eine Filterpatrone mit einem solchen Filterelement gemäß Anspruch 14.

### Stand der Technik

Aus dem Stand der Technik sind Kassettenfilter bekannt, beispielsweise aus der WO 2013/185878 A1, siehe dort Figur 7. Kassettenfilter besitzen einen Rahmen, in welchem eine Mehrzahl von Filterelementen aufgenommen ist. Die Filterelemente bestehen dabei in der Regel aus einem plissierten, d.h. gefalteten Filtermedium. Die Filterelemente sind derart in dem Rahmen aufgenommen, dass jeweils zwei aneinander angrenzende Filterelemente in einem spitzen Winkel zueinander angeordnet sind und somit eine V- förmige Anordnung besitzen. Die Durchströmungsrichtung des Kassettenfilters ist i.d.R. von der breiten Seite des V zur Spitze des V. Zu filternde Luft gelangt dann durch die Öffnung zwischen zwei Filterelementen in den Filter. Eine jeweilige V-förmige Anordnung von Filterelementen kann als Filterpaket bezeichnet werden. Aneinander angrenzende Filterelemente werden im Grenzbereich miteinander verbunden und abgedichtet, z.B. unter Zuhilfenahme von mit Kleber gefüllten Traversen. Im Bereich der Abdichtung kann keine Luft in den Filter einströmen. Je breiter die Abdichtungen sind, desto höher wird die Druckdifferenz des Filters. Schmalere Abdichtungen hingegen würden sich positiv auf den Druckverlust des Filters auswirken.

Um schmalere Abdichtungen zu realisieren ist es bekannt, die plissierten Filterelemente miteinander zu verschränken. Problematisch dabei ist jedoch, dass bei der Verwendung von Glasfaserpapier als Filtermedium auf Grund von seiner geringen mechanischen Festigkeit die Gefahr einer Zerstörung des Filtermediums besteht. Bei einer alternativen Lösung, welche einen Gehrungsschnitt durch die Filterelemente vorsieht, ist eine sichere Abdichtung der Filterelemente im Bereich ihrer Gehrung nur schwierig zu erreichen. Hier kann leicht eine potentielle Leckagestelle entstehen.

Aus dem Stand der Technik sind auch Filterpatronen bekannt, beispielsweise aus der DE 20 2016 005 074 U1. Bei Filterpatronen wird mindestens ein Filterelement zwischen einem Boden und einem Deckel angebracht, sodass sich eine Hülle aus einem Filtermatierial ergibt, welche ein Volumen umschließt. Möglich sind z.B. zylindrische, kegelförmige oder auch quaderförmige Ausgestaltungen. Im Bereich des Deckels ist eine Öffnung vorgesehen, durch welche die zu filternde Luft aus dem Filter austreten kann. Je größer der Randbereich des Deckels bei vorgegebenem Außendurchmesser ausfällt und damit je kleiner die Öffnung wird, desto höher wird die Druckdifferenz des Filters. Die Breite des Randbereichs ist jedoch durch die Höhe des verwendeten Filterelements limitiert. Der Boden einer Patrone kann ebenfalls eine Öffnung aufweisen, z.B. wenn die Filterpatrone in ihrer Längsrichtung geteilt wird, oder eine Abdichtung in der Aufnahmevorrichtung vorgesehen ist. Aus dem Stand der Technik sind unterschiedlichste Filterpatronen bekannt, bei welchen entweder ein Filterelement verwendet wird oder auch mehrere Filterelemente zusammengesetzt werden.

### Aufgabenstellung

Aufgabe der vorliegenden Erfindung ist es ein Filterelement zu schaffen, welches dazu beiträgt, die Druckdifferenz von Kassettenfilter und Filterpatronen zu reduzieren und damit die Filtrationsleistung zu verbessern. Weitere Aufgabe ist es, eine Ausführung des Filterelements auch mit in sich nicht formstabilen und gegebenenfalls brüchigen Materialien, wie zum Beispiel Glasfaserpapier, zu ermöglichen.

Auch ist es Aufgabe der Erfindung Kassettenfilter und Filterpatronen mit verbesserter Filtrationsleistung zu schaffen.

### Technische Lösung

Gelöst wird diese Aufgabe durch ein Filterelement mit den Merkmalen von Anspruch 1.

Das erfindungsgemäße Filterelement besitzt ein gefaltetes Filtermedium, wobei das Filtermedium je zwei Längskanten und zwei Querkanten aufweist, d. h. eine Länge und eine Breite aufweist, und insbesondere rechteckig ist. Das Filtermedium besitzt eine erste Faltung als zickzackförmige Parallelfaltung. Das Filtermedium ist also plissiert. Diese erste Faltung ist dabei derart, dass sich Falzkanten erster Art parallel zu den Querkanten des Filtermediums erstrecken und zwischen Faltenbergen und Faltentälern Faltabschnitte erster Art ausgebildet werden. Beim Falzprodukt, welches durch die Faltung erster Art entsteht, weisen die Faltabschnitte erster Art vier Ecken auf, je zwei Ecken an einem Ende A und am anderen Ende B des Faltzabschnitts des Falzprodukts. Die Falzlängen der ersten Faltung, d. h. der Abstand zwischen Faltenberg und Faltental kann einheitlich sein, sodass alle Falzlängen den gleichen Wert aufweisen. Dann ergeben sich Faltabschnitte erster Art von gleicher Größe, welche insbesondere rechtwinklig sind. In vorteilhafter Weise ist das Filtermedium des Filterelements zusätzlich mindestens mit einer zweiten Faltung als Gegenfaltung versehen. Die Gegenfaltung ist dabei derart, dass in den Faltabschnitten erster Art eine Falzkante zweiter Art vorliegt, wobei jede Falzkante zweiter Art in einem stumpfen Winkel α zur im Faltental liegenden Falzkante erster Art ausgerichtet ist. Dadurch werden Faltabschnitte zweiter Art ausgebildet, welche eine dreieckige Form aufweisen. Die Höhe des so entstehenden Filterelements - in Richtung der ursprünglichen Längskante des Filtermediums gesehen - ist an den beiden Enden A, B des Filterelements unterschiedlich. Auf der Seite des Filterelements A, auf welcher die zweite Faltung als Gegenfaltung eingebracht wurde, weist das Filterelement eine geringere Höhe auf. Die bei der zweiten Faltung entstehenden Falzkanten zweiter Art bilden insbesondere Faltentäler aus und die zwischen zwei Faltabschnitten zweiter Art liegende Falzkante erster Art wird durch die Faltung zweiter Art jeweils zu einem Faltenberg ausgeformt. In anderen Worten: es wird durch die zweite Faltung eine erste Ecke des Faltabschnitts erster Art eingeschlagen, d.h. die Ecke wird so umgeschlagen, dass sie auf die Fläche des ersten Faltabschnitts abgelegt wird, es wird also durch die zweite Faltung eine erste Ecke des Faltabschnitts erster Art nach innen geklappt, d.h. die Falzkante erster Art wird im Bereich der Faltung zweiter Art in die entgegengesetzte Richtung gefaltet.

Vorteilhaft an einem solchen Filterelement ist auch dessen größere Stabilität im Vergleich zu einem Filterelement, welches nur Faltungen erster Art aufweist.

Bei der Verwendung der Begrifflichkeiten "Faltental" und "Faltenberg" ist folgendes zu beachten: Die Position des Betrachters bezüglich des Filterelements und sein Blickwinkel darauf entscheiden darüber, ob es sich bei einer Falzkante um einen Faltenberg oder ein Faltental handelt. Wird beispielsweise das Filterelement um 180 Grad gewendet, so wird aus einem Faltental ein Faltenberg und umgekehrt. Bei der bisherigen sowie bei der zukünftigen Verwendung der Begrifflichkeiten "Faltenberg" und "Faltental" soll diese ausschließlich einer eindeutigen Beschreibung des Filterelements dienen. Es soll keine dahingehende Beschränkung eingeführt werden, dass das Filterelement nur in einer bestimmten Einbaulage sichtbar sein könne oder verwendet werden dürfe.

In einer vorteilhaften Weiterbildung des erfindungsgemäßen Filterelements erstrecken sich die Falzkanten zweiter Art in der Querrichtung des Filtermediums nur über einen kleinen Teil der Breite des Filtermediums, insbesondere über maximal ein Viertel der Breite. Dies ist besonders für den Einsatz der Filterelemente in Kassettenfiltern vorteilhaft.

Beim Einsatz des Filterelements in einer Filterpatrone hingegen kann es vorteilhaft sein, wenn sich die Falzkanten zweiter Art über die ganze Breite des Filtermediums erstrecken, d. h. vom Deckel bis zum Boden der Filterpatrone. So werden Knicke des Filterelements im Innenbereich der Filterpatrone vermieden.

Es wurde als vorteilhaft erkannt, das Filterelement mit einer weiteren Faltung zweiter Art zu versehen, wobei diese Faltung gegenüber zur Faltung zweiter Art in den Faltabschnitt erster Art eingebracht ist und die der Faltung zweiter Art gegenüberliegende Höhe des Faltabschnitts erster Art teilt. Jede bei dieser Faltung gebildete Falzkante liegt dabei in einem stumpfen Winkel zur im Faltenberg liegenden Falzkante erster Art, derart, dass dreieckige Faltabschnitte zweiter Art ausgebildet werden. Durch diese Faltung wird in vorteilhafter Weise erreicht, dass die Höhe des gefalteten Filterelements nicht nur am einen Ende A, sondern auch am anderen Ende B verringert wird. In anderen Worten: es wird nicht nur eine erste Ecke des Faltabschnitts erster Art sondern auch noch eine zweite Ecke des Faltabschnitts erster Art eingeschlagen bzw. nach innen geklappt, wobei die zweite Ecke am anderen Ende B des Faltabschnittes erster Art liegt.

In Weiterbildung kann eine weitere Gegenfaltung vorgesehen sein. Diese Gegenfaltung ist dabei derart, dass in jedem Faltabschnitt erster Art eine weitere Falzkante vorliegt, wobei diese Falzkante in einem stumpfen Winkel β zur im Faltenberg liegenden Falzkante erster Art ausgerichtet ist, so dass weitere dreieckige Faltabschnitte ausgebildet werden. Die Faltung ist dabei derart, dass die weiteren Falzkanten Faltenberge ausbilden und die zwischen zwei solcher weiterer dreieckiger Faltabschnitte liegende Falzkante erster Art in ein Faltental umgeformt ist. Durch diese weitere Gegenfaltung wird die gleiche Längskante das Faltabschnitts erster Art geteilt, wie durch die Faltung zweiter Art. Die so gefalteten Filterelemente besitzen an dem Ende A, an welchem die weitere Gegenfaltung eingebracht ist, damit eine Spitze. In anderen Worten: es wird nicht nur eine erste Ecke des Faltabschnitts erster Art sondern auch noch die zweite Ecke des Faltabschnitts erster Art eingeschlagen bzw. nach innen geklappt, welche ebenfalls am selben Ende A des Faltabschnittes erster Art liegt.

Um die Höhe des Filterelements im Bereich des bereits mit einer Gegenfaltung versehenen Endes weiter reduzieren zu können und um ein Überstehen von Faltabschnitten zweiter Art über die Falzkanten erster Art hinaus zu vermeiden, wurde es als vorteilhaft erkannt, das Filterelement mit einer weiteren Gegenfaltung zu versehen, einer Faltung dritter Art. Diese ist als Gegenfaltung in die dreieckigen Faltabschnitte zweiter Art eingebracht.

Es wurde als vorteilhaft erkannt, wenn das Filterelement beschnitten ist, derart, dass der Schnitt durch die dreieckigen Faltabschnitte zweiter Art geht. So können bei den verschiedenen Faltungen entstandene Kanten im Bereich der Stirnseiten der Filterlemente abgeschnitten werden, um einen Höhenversatz zu minimieren.

Die Erfindung betrifft auch einen Kassettenfilter mit einem Rahmen und mit einer Mehrzahl von wie obenstehend beschriebenen Filterelementen. Die Filterelemente sind dabei derart in dem Rahmen aufgenommen, dass je mindestens zwei aneinander angrenzende Filterelemente in einem spitzen Winkel ϕ zueinander angeordnet sind, wobei die Falzkanten erster Art von je einem der aneinander angrenzenden Filterelemente die Schenkel des spitzen Winkels bilden. Die Filterelemente besitzen damit eine V-förmige Anordnung. In vorteilhafter Weise ist mindestens jedes zweite Filterelement innerhalb des Paars von Filterelementen einer V-förmigen Anordnung wie obenstehend beschrieben ausgebildet und besitzt mindesens eine Gegenfaltung. Das jeweils andere Filterelement weist zumindest eine erste Faltung, d. h. eine Parallelfaltung - wie oben ausgeführt - auf.

Durch die Verwendung der erfindungsgemäßen Filterelemente wird in vorteilhafter Weise erreicht, dass die Bereiche verkleinert werden, in welchen keine Luft den Filter durchströmen kann, nämlich die Grenzbereiche, in welchem die Filterelemente aneinander angrenzen und abgedichtet werden,. Abhängig von den Dimensionen des Filterelements und den verwendeten Faltungen kann dieser störende Bereich wesentlich verkleinert werden. Durch die Verkleinerung ergibt sich ein geringerer Druckverlust des Kassettenfilters und damit eine bessere Filtrationsleistung.

In einer besonders vorteilhaften und daher bevorzugten Weiterbildung des erfindungsgemäßen Kassettenfilters weisen jeweils zwei eine V-förmige Anordnung bildende Filterelemente im Bereich von ihren Falzkanten zweiter Art und/oder im Bereich der weiteren Falzkanten den geringsten Abstand zu einander auf. Damit die jeweiligen Filterelemente nicht aneinander reiben und damit womöglich eine Zerstörung oder zumindest Beschädigung des Filtermediums bewirken würden, kann trotzdem noch ein minimaler Abstand zwischen den beiden Filterelementen vorgesehen sein.

Es wurde als vorteilhaft erkannt, wenn die Falzkanten zweiter Art von je zwei aneinander angrenzenden Filterelementen minimal beabstandet sind, insbesondere maximal 3 Millimeter. Dies erlaubt eine besonders enge Anordnung der Filterelemente, wobei sich die Filterelemente trotzdem nicht gegenseitig beeinträchtigen. Aneinander angrenzen meint hierbei nicht notwendiger Weise einander berühren, sondern vielmehr direkt nebeneinander positioniert sein.

In einer alternativen Ausgestaltung sind die Falzkanten zweiter Art von je zwei aneinander angrenzenden Filterelementen, welche eine V-förmige Anordnung bilden, mit so geringem Abstand zueinander positioniert, dass sich diese berühren. Eine derartige Anordnung ist vornehmlich dann zu empfehlen, wenn das Filtermedium tolerant gegenüber Berührungen ist. Ein Beispiel für ein hierfür geeignetes Filtermedium ist aus Polypropylen gefertigt.

In einer besonders vorteilhaften und daher bevorzugten Weiterbildung des Kassettenfilters sind je zwei aneinander angrenzende Filterelemente mittelbar oder unmittelbar miteinander verklebt. Bei einer mittelbaren Verklebung kann eine Traverse vorgesehen sein, in welche ein Klebstoff eingebracht wird. Bei einer unmittelbaren Verklebung werden keine weiteren Elemente benötigt und der Klebstoff wird direkt auf die Filterelemente aufgebracht und diese direkt miteinander verbunden. Die Verklebung erstreckt sich insbesondere nur auf die Stirnseiten der Filterelemente. So bleibt die wirksame Filterfläche nahezu unverändert und die Filtrationsleistung wird kaum beeinträchtigt. Die Verklebung insbesondere mit Traversen des Rahmens stellt sicher, dass zwischen den Filterelementen keine Leckagestellen bestehen und die zu filternde Luft - nicht ohne durch das Filtermedium eine Filtration zu erfahren - durch die Leckagestellen den Filter durchströmen kann. Als besonders vorteilhaft wird es angesehen, die Verklebung durch einen PUR-Verguss zu realisieren.

Die Erfindung betrifft auch eine Filterpatrone mit einem Boden, einem mit einer mittigen Ausnehmung versehenen Deckel und mindestens einem zwischen dem Boden und dem Deckel angeordneten Filterelement. Das Filterelement ist wie obenstehend beschrieben ausgeführt und besitzt somit ein mit einer Faltung und einer Gegenfaltung versehenes Filtermedium. Das Filterelement ist derart ausgeformt, dass sich eine Hülle aus einem Filtermatierial ergibt, welche ein Volumen umschließt. Möglich sind z.B. zylindrische, kegelförmige oder auch quaderförmige Ausgestaltungen. Das Filterelement kann beispielsweise zu einer zylindrischen oder kegelstumpfförmigen Form gerollt sein, so dass eine zylindrische oder kegelstrumpfförmige Filterpatrone ausgebildet wird. In vorteilhafter Weise ist die mindestens eine Gegenfaltung des Filterelements zur Ausnehmung des Deckels hin orientiert. Dasjenige Ende des Filterelements, in welches die mindestens eine Gegenfaltung eingebracht ist, grenzt also an den Deckel an. Durch die Verwendung eines gegengefalteten Filterelements wird in vorteilhafter Weise eine größere Ausnehmung des Deckels ermöglicht, d. h. ein Loch mit einem größeren Durchmesser. So kann der Druckverlust der Filterpatrone wesentlich reduziert und die Filtrationsleistung der Filterpatrone gesteigert werden.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar. Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

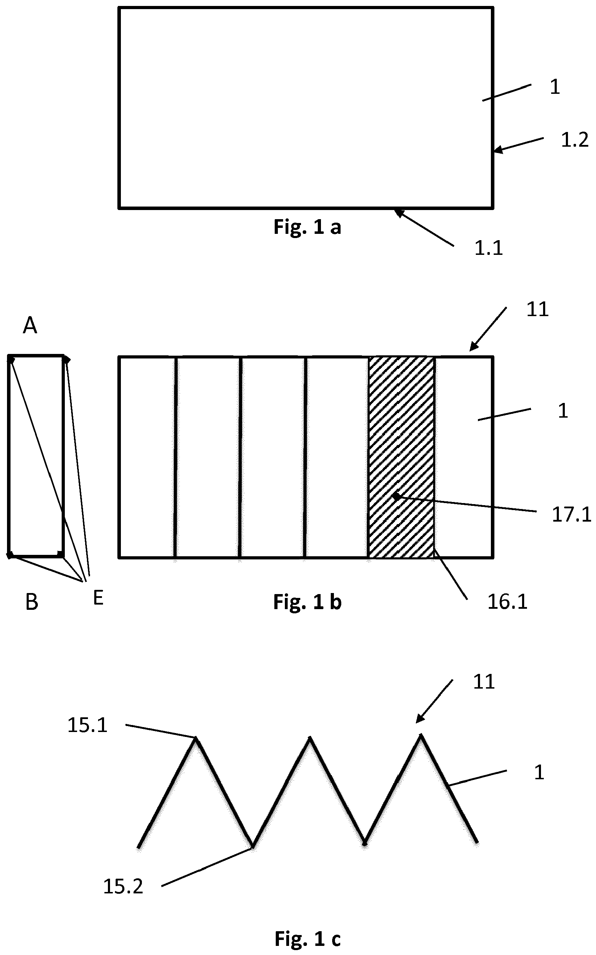

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.
Es zeigen in schematischer Darstellung
- Fig. 1b: ein Filtermedium
- Fig. 1b und c: das Filtermedium mit einer ersten Faltung
- Fig. 2a und b: räumliche Ansichten des Filterelements mit einer Faltung zweiter Art als Gegenfaltung
- Fig. 3a und b: räumliche Ansichten des Filterelements mit einer weiteren Faltung zweiter Art als Gegenfaltung
- Fig. 3c: eine Ansicht des Filterelements
- Fig. 4a: eine räumliche Ansicht des Filterelements mit einer weiteren Gegenfaltung
- Fig. 4b: eine Ansicht des Filterelements
- Fig. 5: eine räumliche Ansicht des Filterelements mit einer Faltung dritter Art als weiteren Gegenfaltung
- Fig. 6a - f: unterschiedliche Anordnungmöglichkeiten von Filterlementen in einem Kassettenfilter
- Fig. 7: ein Filterelement mit einem Beschnitt
- Fig. 8: zwei Filterelemente mit einer Verklebung
- Fig. 9: eine Filterpatrone gemäß dem Stand der Technik
- Fig. 10a: eine erste Ausführungsform einer erfindungsgemäßen Filterpatrone
- Fig. 10b: eine zweite Ausführungsform einer erfindungsgemäßen Filterpatrone

Figur 1a zeigt ein rechteckiges Filtermedium 1 mit einer kürzeren Querkante 1.2 und einer längeren Längskante 1.1. Dieses Filtermedium erhält eine erste Faltung 11, nämlich eine Parallelfaltung, welche auch als Leporello-Faltung bezeichnet wird. Das Filtermedium 1 wird also plissiert. Die Faltung erster Art 11 geht aus den Figuren 1b und 1c hervor. Wie in Figur 1b dargestellt, werden durch die erste Faltung 11 parallel zueinander liegende Falzkanten erster Art 16.1 erzeugt und Falzabschnitte erster Art 17.1, welche jeweils von zwei Falzkanten erster Art 16.1 bzw. von einer Falzkante erster Art 16.1 und der Querkante 1.2 begrenzt werden. Um die Lage eines Faltabschnitts erster Art 17.1 zu verdeutlichen, ist dieser schraffiert dargestellt.Durch die Faltung erster Art 11 entstehen - wie in Figur 1c dargestellt - Faltenberge 15.1 und Faltentäler 15.2. Beim Falzprodukt, welches durch die Faltung erster Art 11 entsteht, weisen die Faltabschnitte erster Art 17.1 vier Ecken auf, je zwei Ecken an einem Ende A und am anderen Ende B des Faltzabschnitts 17.1 des Falzprodukts. Die Ecken E sind in Fig. 1b links in der Seitenansicht des Falzproduktes dargestellt.

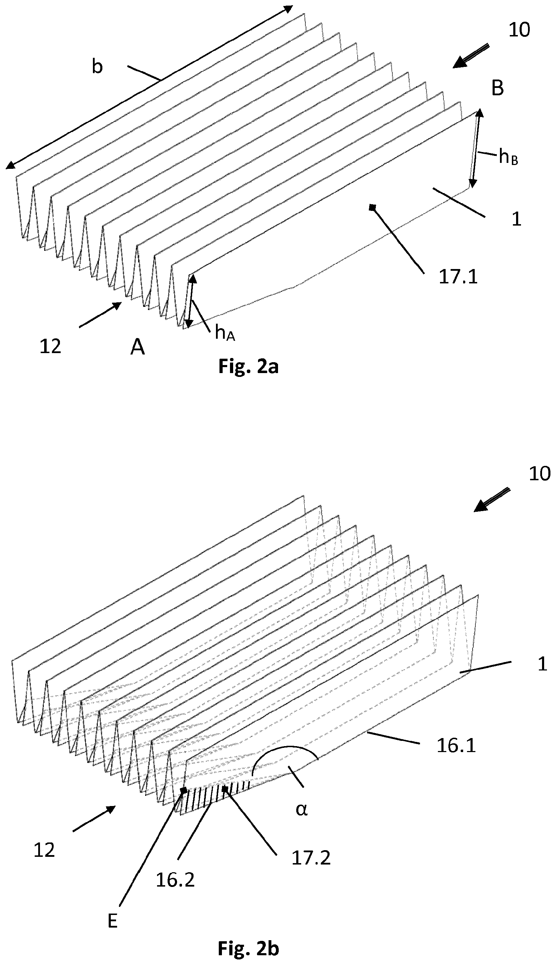

Erfindungsgemäß wird ein mit einer solchen ersten Faltung 11 versehenes Filtermedium 1 durch mindestens eine weitere Faltung 12, weiterbearbeitet. Unterschiedliche Varianten eines erfindungsgemäßen Filterelements 10 mit einer ersten Faltung 11 und mindestens einer weiteren Faltung 12, 13, 14 sind in den nachfolgend beschriebenen Figuren 2-5 abgebildet.

In dem in den Figuren 2a und b dargestellten Filterelement 10 ist das Filtermedium 1 am Ende A des Falzabschnittes erster Art 17.1 mit einer zweiten Faltung 12 als Gegenfaltung versehen. Dabei wurde in jedem Faltabschnitt erster Art 17.1 eine Falzkante zweiter Art 16.2 erzeugt, wobei die Faltung 12 derart ist, dass jede Falzkante zweiter Art 16.2 in einem stumpfen Winkel α zur im Faltental 15.2 liegenden Falzkante erster Art 16.1 ausgerichtet ist (siehe Figur 2b). Durch die zweite Faltung 12 werden Faltabschnitte zweiter Art ausgebildet, welche eine dreieckige Form 17.2 aufweisen. Um die Lage eines dreieckigen Faltabschnitts zweiter Art 17.2 zu verdeutlichen, ist dieser schraffiert dargestellt.Die zweite Faltung 12 und die Falzkanten zweiter Art 16.2 erstrecken sich in der in den Figuren 2a und 2b dargestellten Ausführungsvariante nur über einen kleinen Teil der Breite b des Filtermediums 1. In anderen Worten: es wird durch die zweite Faltung 12 eine erste Ecke E des Faltabschnitts erster Art 17.1 eingeschlagen bzw. nach innen geklappt, d.h. die Ecke E wird so umgeschlagen, dass sie auf die Fläche des ersten Faltabschnitts 17.1 abgelegt wird.

Durch die zweite Faltung 12 ergibt sich, dass das Filterelement 10 im Bereich der zweiten Faltung 12 am Ende A eine geringere Höhe h_{A} aufweist, als die Höhe h_{B} am Ende B des Filterelements 10.

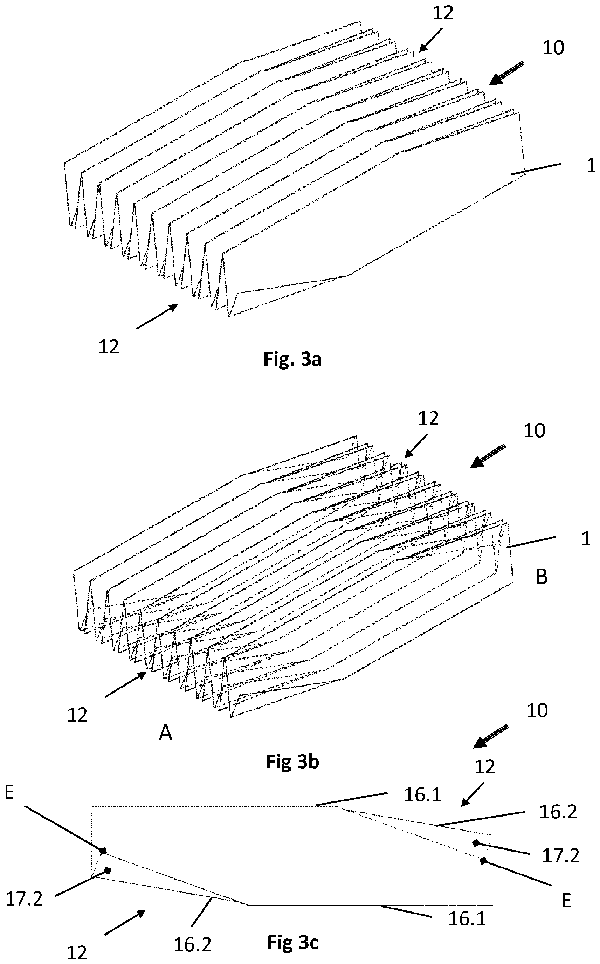

Das Filterelement 10, welches in den Figuren 3a bis 3c dargestellt ist, wurde zusätzlich zur Faltung zweiter Art 12, wie sie in den Figuren 2 gezeigt ist, mit einer weiteren Faltung zweiter Art 12 versehen, wobei diese Faltung zweiter Art 12 schräg gegenüber zur Faltung zweiter Art 12 am anderen Ende B des Faltabschnitts erster Art 17.1 in diesen eingebracht ist. Diese weiteren Faltung zweiter Art 12 ist in Figur 3a auf der rechten Seite zusehen. Durch diese weitere Faltung zweiter Art 12 und ihre Falzkante zweiter Art 16.2 wird die deranhand der Figuren 2a und 2b beschriebenen Faltung zweiter Artgegenüberliegende Längskante des Faltabschnitts erster Art 17.1 geteilt. In anderen Worten: es wird nicht nur eine erste Ecke E des Faltabschnitts erster Art 17.1 sondern auch noch eine gegenüberliegende zweite Ecke E des Faltabschnitts erster Art 17.1 eingeschlagen bzw. nach innen geklappt, wobei die zweite Ecke E am anderen Ende B des Faltabschnittes erster Art 17.1 liegt. Auch bei dieser weiteren Faltung zweiter Art 12 werden dreieckige Faltabschnitte zweiter Art 17.2 ausgebildet. Wie besonders gut aus der Seitenansicht von Figur 3c zu erkennen ist, weist das Filterelement 10 im Bereich der beiden Faltungen zweiter Art 12 eine geringere Höhe auf.

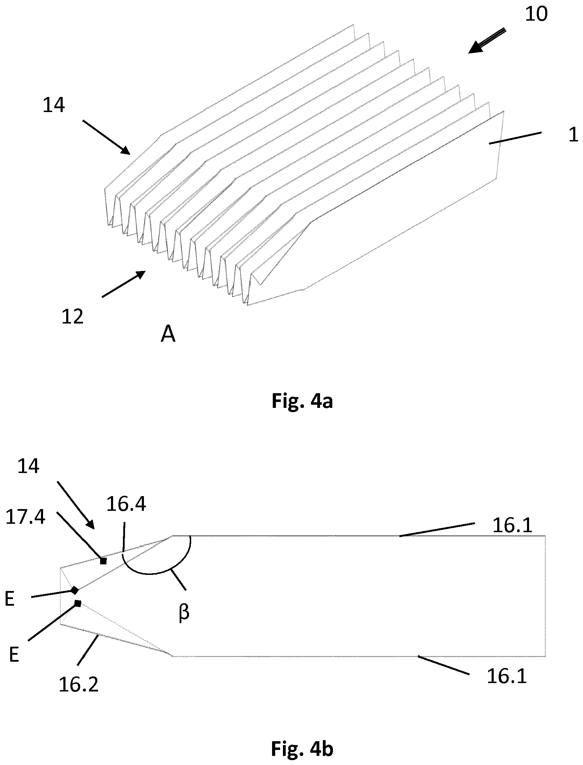

Das in den Figuren 4a und 4b dargestellte Filterelement 10 wurde ausgehend vom Filterelement 10, wie in den Figuren 2a und 2b dargestellt, mit einer weiteren Gegenfaltung 14 versehen. Die weitere Gegenfaltung 14 ist dabei derart, dass eine weitere Falzkante 16.4 vorliegt, wobei diese Falzkante 16.4 in einem stumpfen Winkel β zur im Faltenberg 15.1 liegenden Falzkante erster Art 16.1 ausgerichtet ist. In anderen Worten: es wird nicht nur eine erste Ecke E des Faltabschnitts erster Art 17.1 sondern auch noch die zweite Ecke E des Faltabschnitts erster Art 17.1 eingeschlagen bzw. nach innen geklappt, welche ebenfalls am selben Ende A des Faltabschnittes erster Art 17.1 liegt.Durch die weitere Gegenfaltung 14 ergeben sich so weitere dreieckige Faltabschnitte 17.4. In dem Bereich des Filterelements 10, in welchem das Filtermedium 1 mit der zweiten Faltung 12 und der weiteren Gegenfaltung 14 versehen ist, ist das Filterelement 10 - in seiner Seitenansicht -zulaufend mit verjüngender Höhe ausgeführt.

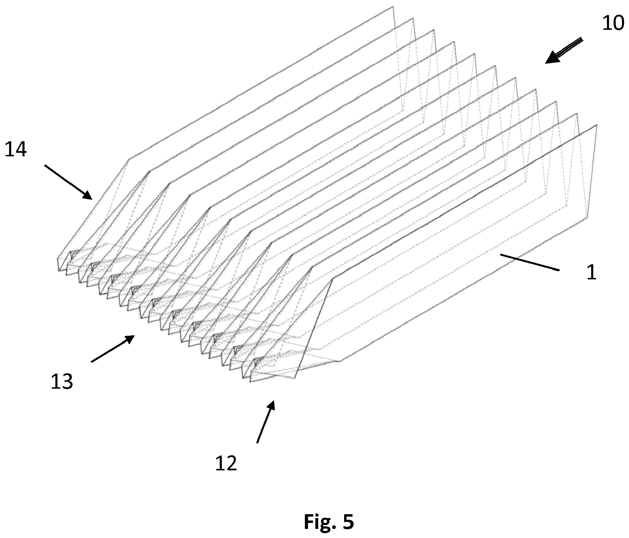

Gemäß dem in Figur 5 dargestellten Filterelement 10 wurde das Filtermedium 1 zusätzlich mit einer Faltung dritter Art 13 versehen, welche als Gegenfaltung 13 in die dreieckigen Faltabschnitte zweiter Art 17.2 eingebracht ist. Dank der zweiten Faltung 12, der dritten Faltung 13 und der weiteren Gegenfaltung 14, welche alle in einem Bereich des Filterelements 10 eingebracht sind, kann die Höhe des Filterelements 10 in diesem Bereich stark verringert werden.

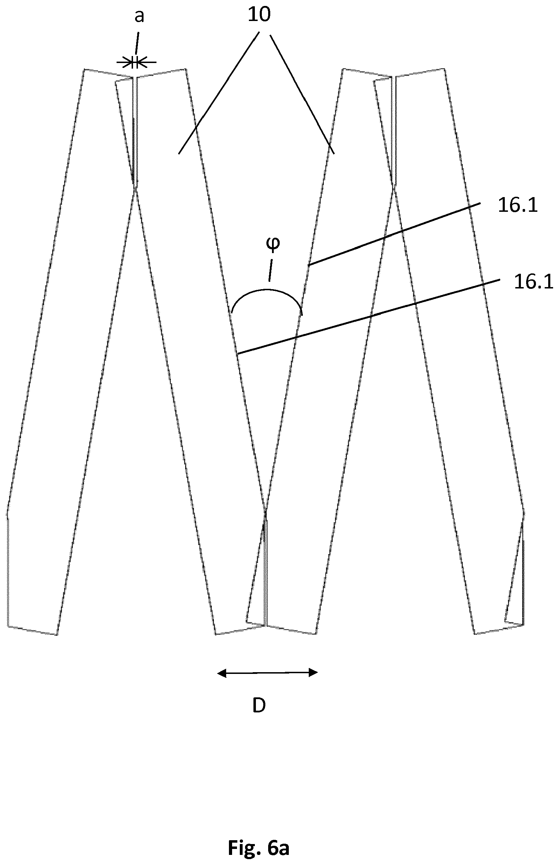

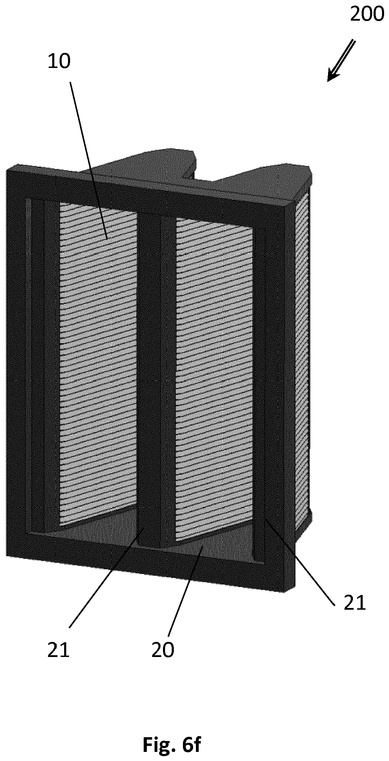

In Figur 6a ist dargestellt, wie die zuvor beschriebenen Filterelemente 10 abhängig von den vorhandenen Faltungen 12, 13, 14 zueinander positioniert werden können, so dass die Filterelemente 10 in einem spitzen Winkel ϕ zueinander angeordnet sind und von einem Rahmen eines Kassettenfilters 200 (siehe Fig. 6f) aufgenommen werden können. Die Falzkanten erster Art 16.1 von zwei aneinander angrenzenden Filterelementen 10 bilden dabei die Schenkel des spitzen Winkels ϕ. Dadurch ergibt sich, dass die Filterelemente 10 eine V-förmige Anordnung besitzen. In der in Figur 6a dargestellten Variante wurden Filterelemente 10 verwendet, welche jeweils mit einer zweiten Faltung 12 als Gegenfaltung sowie einer gegenüberliegenden weiteren zweiten Gegenfaltung 12 versehen sind. Durch die Verwendung dieser Filterelemente 10 kann - im Gegensatz zu Filterelementen, welche nicht mit Gegenfaltungen 12, 13, 14 versehen sind und in ihrer Seitenansicht eine rechteckige Ausgestaltung aufweisen - der Bereich D verkleinert werden, wobei der Bereich D derjenige ist, der im Grenzbereich liegt und wegen der Abdichtung der Filterelemente nicht von Luft L durchströmbar ist. Durch die Verkleinerung dieses Bereichs D kann der abgedichtete und nicht durchströmbare Bereich verkleinert werden und die Druckdifferenz eines Filters 200 mit solchen Filterelementen 10 reduziert werden.

Damit die Filterelemente 10 nicht aneinander reiben und es zu keiner Beschädigung des Filtermediums 1 kommt, weisen die Filterelemente 10 einen Abstand a zueinander auf. Dieser Abstand kann im Bereich von wenigen Millimetern liegen.

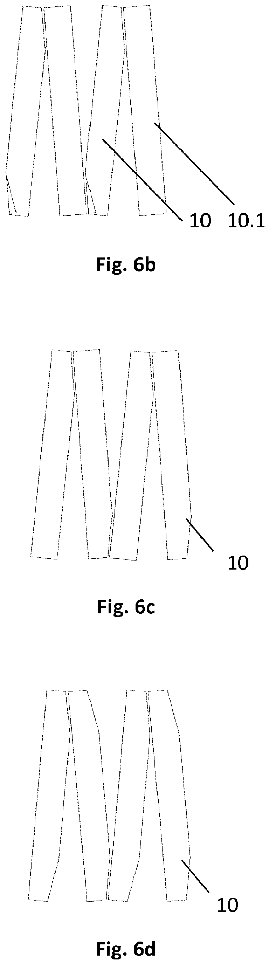

In der Anordnungsvariante gemäß Figur 6b wurden abwechselnd Filterelemente 10 mit einer Gegenfaltung 12 und Filterelemente 10.1 ohne eine solche Gegenfaltung verwendet.

In der Anordnungsvariante gemäß Figur 6c wurden Filterelemente 10 mit nur einer Gegenfaltung 12 verwendet.

In der Anordnungsvariante gemäß Figur 6d wurden Filterelemente 10 verwendet, welche jeweils mit zwei Gegenfaltungen 12, nämlich je einer Gegenfaltung 12 am jeweiligen Ende des Filtermediums 1 versehen sind.

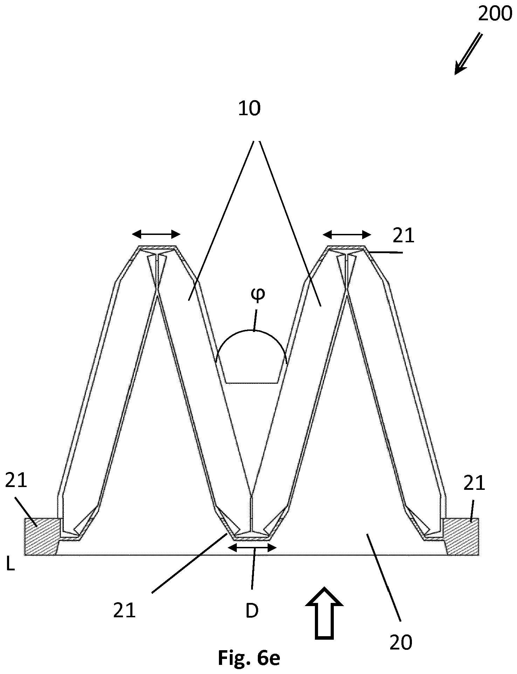

In der Anordnungsvariante gemäß Figur 6e wurden Filterelemente 10 verwendet, welche mit mehreren Gegenfaltungen 12, 13, 14 versehen sind. Die Filterelemente 10 sind so in ihren jeweiligen Enden besonders schmal ausgeführt, d. h. weisen eine geringe Höhe auf.

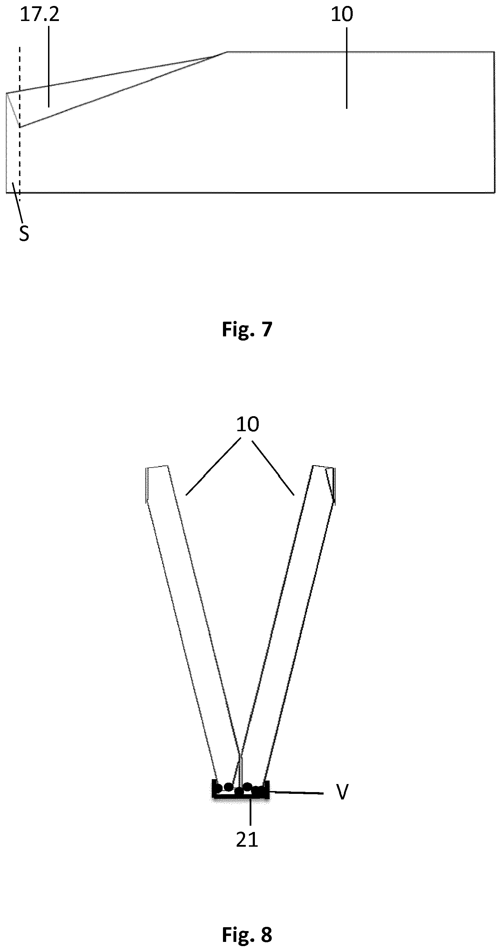

Im Grenzbereich, wo die Filterelemente 10 aneinander angrenzen und gegeneinander abgedichtet sind, sind in diesem Beispiel leistenförmige Traversen 21 vorgesehen. Damit die Filterelemente 10 gegenüber dem Rahmen 20 und den Traversen 21 abgedichtet sind und keine Bypässe vorliegen, wo Luft L den Filter 200 passieren kann ohne die Filterelemente 10 zu durchströmen, können die Filterelemente 10 im Bereich der Traverse 21 miteinander verklebt sein. Eine solche Verklebung V, welche beispielsweise durch einen Verguss mit PUR Klebstoff erfolgen kann, ist in Figur 8 angedeutet. Die Traversen 21, können ebenfalls schmal ausgeführt sein. Dadurch kann der Bereich D, welcher nicht von Luft L durchströmt werden kann, klein gehalten werden. In der Schnittdarstellung von Fig. 6e sind die Traversen 21 schraffiert dargestellt. Aufgenommen werden die Filterelemente 10 von einem Rahmen 20 und bilden so einen Kassettenfilter 200 mit V-förmiger Anordnung der Filterelemente 10.

In Fig. 6f ist beispielhaft ein Kassettenfilter 200 mit der Ausgestaltung der Filterelemente 10 gemäß Fig. 6e gezeigt. Die Filterelemente 10 sind dabei in einem Rahmen 20 angeordnet, derart, dass sich eine V-förmige Anordnung der Filterelemente 10 ergibt.

Um die Verklebung V zu vereinfachen und den Bedarf an Klebstoff zu reduzieren, kann der Höhenversatz im Bereich der Gegenfaltungen 12, 13, 14 minimiert werden, in dem ein Beschnitt S durch den Faltabschnitt zweiter Art 17.2 erfolgt. Dies geht aus Figur 7 hervor.

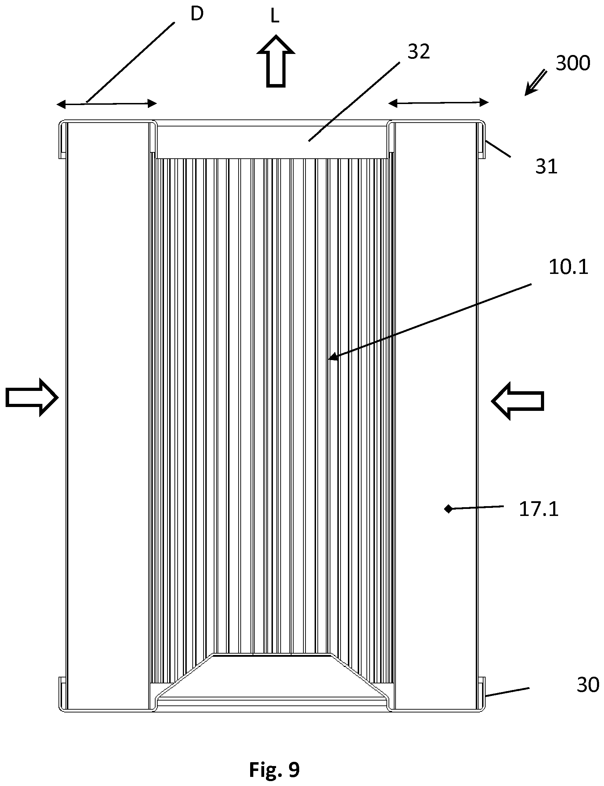

In Figur 9 ist eine Filterpatrone 300 gemäß dem Stand der Technik im Schnitt dargestellt. Die Filterpatrone 300 besitzt einen Boden 30, einen mit einer mittigen Ausnehmung 32 versehenen Deckel 31 und ein zwischen Deckel 31 und Boden 30 angeordnetes Filterelement 10.1, wobei das Filterelement 10.1 in eine zylindrische Form gebracht ist. Das Filterelement 10.1 wurde mit einer Faltung erster Art 11 versehen und ist damit plissiert.

Durch die Ausnehmung, also die Öffnung 32 im Deckel 31, kann die zu filternde Luft L aus dem Filter 300 austreten. Je größer der Randbereich des Deckels 31 ausfällt und damit je kleiner die Öffnung 32, desto höher wird die Druckdifferenz des Filters 300. Die Breite D des Randbereichs ist jedoch durch die Höhe des verwendeten Filterelements 10.1 limitiert, also die Faltenhöhe des verwendeten Filterelements 10.1, also die Höhe des Faltabschnitts erster Art 17.1.

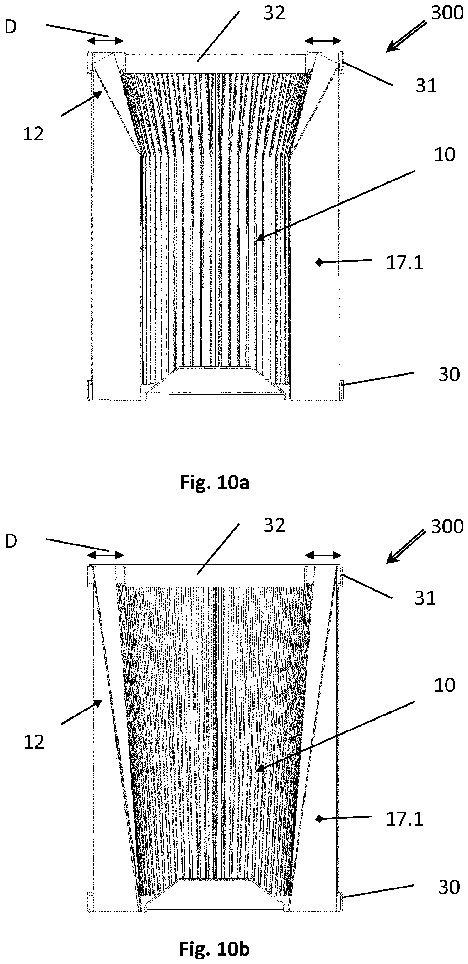

In Figuren 10a und 10b sind ebenfalls Filterpatronen 300 dargestellt. Im Unterschied zur Filterpatrone 300 nach dem Stand der Technik wurde jedoch bei diesen erfindungegemäßen Filterpatronen ein Filterelement 10 mit einer Gegenfaltung 12 verwendet. Es könnten auch mehrere Gegenfaltungen 12, 13, 14 - wie oben beschrieben - vorgesehen sein. Die Gegenfaltung 12 des Filterelements 10 ist zur Ausnehmung 32 hin orientiert, derart, dass das Filterelement 10 im Bereich des Deckels 31 eine geringere Höhe aufweist, sodass der Randbereich des Deckels 31 geringer und der Durchmesser der Ausnehmung 32 größer ausfallen kann. In anderen Worten: der Bereich D, welcher nicht von Luft durchströmt werden kann, kann verkleinert werden. Während sich die Gegenfaltung 12 und damit die Falzkanten zweiter Art 16.2 nach Figur 10a nur über einen kleinen Teil der Breite des Filterelements 10 erstrecken, erstrecken sie sich nach Figur 10b über die gesamte Breite. Gemäß der zweiten Variante ergibt sich eine kontinuierliche Änderung der Höhe des Filterelelements und damit eine kontinuierliche Aufweitung des Innenraumes der Filterpatrone 300, d.h. es liegen keine Knicke am Filterlement 10 vor.

### Bezugszeichenliste

- 1: Filtermedium
- 1.1: Längskante
- 1.2: Querkante
- 10: Filterelement
- 10.1: Filterelement ohne Gegenfaltung
- 11: erste Faltung / Faltung erster Art
- 12: zweite Faltung / Faltung zweiter Art
- 13: dritte Faltung / Faltung dritter Art
- 14: weitere Faltung / Faltung weiterer Art
- 15.1: Faltenberg
- 15.2: Faltental
- 16.1: Falzkante erster Art
- 16.2: Falzkante zweiter Art
- 16.3: Falzkante dritter Art
- 16.4: Falzkante weiterer Art
- 17.1: Faltabschnitt erster Art
- 17.2: Faltabschnitt zweiter Art
- 17.3: Faltabschnitt dritter Art
- 17.4: Faltabschnitt weiterer Art

- 20: Rahmen
- 21: Traverse

- 30: Boden
- 31: Deckel
- 32: Ausnehmung (Loch)
- 200: Kassettenfilter
- 300: Filterpatrone

- a: Abstand
- b: Breite des Filtermediums

- A: Ende des Falzproduktes
- B: anderes Ende des Falzproduktes
- D: Bereich, der von Luft nicht durchströmbar ist
- E: Ecke des Falzproduktes
- L: Luftstrom
- S: Beschnitt
- V: Verklebung

- α: Winkel zwischen Falzkante erster Art und zweiter Art
- β: Winkel zwischen weiterer Falzkante und Falzkante erster Art
- ϕ: Winkel zwischen aneinander angrenzenden Filterelementen

## Patentansprüche

1. Filterelement (10) mit einem gefalteten Filtermedium (1), wobei das Filtermedium (1) je zwei Längskanten (1.1) und Querkanten (1.2) aufweist, wobei das Filtermedium (1) eine erste Faltung (11) als zickzack-förmige Parallelfaltung besitzt derart, dass sich Falzkanten erster Art (16.1) parallel zu den Querkanten (1.2) des Filtermediums (1) erstrecken und zwischen Faltenbergen (15.1) und Faltentälern (15.2) Faltabschnitte erster Art (17.1) ausgebildet werden,
**dadurch gekennzeichnet,**
**dass** das Filtermedium (1) mindestens mit einer zweiten Faltung (12) als Gegenfaltung versehen ist, wobei in jedem Faltabschnitt erster Art (17.1) eine Falzkante zweiter Art (16.2) vorliegt, wobei jede Falzkante zweiter Art (16.2) in einem stumpfen Winkel (a) zur im Faltental (15.2) liegenden Falzkante erster Art (16.1) ausgerichtet ist, derart, dass dreieckige Faltabschnitte zweiter Art (17.2) ausgebildet werden.

2. Filterelement nach Anspruch 1 **dadurch gekennzeichnet,**
**dass** die Falzkanten zweiter Art (16.2) Faltentäler (15.2) ausbilden und die zwischen zwei Faltabschnitten zweiter Art (17.2) liegende Falzkante erster Art (16.1) einen Faltenberg (15.1) ausbildet.

3. Filterelement nach einem der vorangehenden Ansprüche **dadurch gekennzeichnet,**
**dass** sich die Falzkanten zweiter Art (16.2) nur über einen kleinen Teil der Breite (b) des Filtermediums (1) erstrecken, insbesondere über maximal ein Viertel der Breite (b).

4. Filterelement nach einem der vorangehenden Ansprüche **dadurch gekennzeichnet,**
**dass** das Filtermedium (1) mit mindestens einer weiteren zweiten Faltung (12, 14) als Gegenfaltung versehen ist, wobei diese zumindest eine weitere Ecke (E) des Faltabschnitts erster Art (17.1) einschlägt bzw. nach innen klappt, wobei die weitere Ecke (E) am selben Ende (A) und/oder am anderen Ende (B) des Faltabschnittes erster Art (17.1) liegt, in welcher die zweite Faltung (12) als Gegenfaltung eingebracht ist.

5. Filterelement nach einem der vorangehenden Ansprüche **dadurch gekennzeichnet,**
**dass** das Filtermedium (1) mit einer weiteren Faltung zweiter Art (12) versehen ist, wobei diese gegenüber zur Faltung zweiter Art (12) in den Faltabschnitt erster Art (17.1) eingebracht ist und die der Faltung zweiter Art (12) gegenüberliegende Höhe des Faltabschnitts erster Art (17.1) teilt.

6. Filterelement nach einem der vorangehenden Ansprüche **dadurch gekennzeichnet,**
**dass** das Filtermedium (1) mit einer weiteren Gegenfaltung (14) versehen ist, wobei in jedem Faltabschnitt erster Art (17.1) eine weitere Falzkante (16.4) vorliegt, wobei diese Falzkante (16.4) in einem stumpfen Winkel (β) zur im Faltenberg (15.1) liegenden Falzkante erster Art (16.1) ausgerichtet ist, derart, dass weitere dreieckige Faltabschnitte (17.4) ausgebildet werden.

7. Filterelement nach einem der vorangehenden Ansprüche **dadurch gekennzeichnet,**
**dass** das Filtermedium (1) mit einer Faltung dritter Art (13) versehen ist, welche als Gegenfaltung in die dreieckigen Faltabschnitte zweiter Art (17.2) eingebracht ist.

8. Filterelement nach einem der vorangehenden Ansprüche **dadurch gekennzeichnet,**
**dass** das Filterelement (10) beschnitten ist, derart, dass der Schnitt (S) durch die dreieckigen Faltabschnitte zweiter Art (17.2) geht.

9. Kassettenfilter (200) mit einem Rahmen (20) und einer Mehrzahl von Filterelementen (10) mit einem mit einer Faltung versehenen Filtermedium (1), wobei die Filterelemente (10) derart in dem Rahmen (20) aufgenommen sind, dass je mindestens zwei aneinander angrenzende Filterelemente (10) in einem spitzen Winkel (ϕ) zueinander angeordnet sind und so eine V-förmige Anordnung besitzen **dadurch gekennzeichnet,**
**dass** mindestens jedes zweite Filterelement (10) nach einem der vorangehenden Ansprüche ausgebildet ist.

10. Kassettenfilter nach Anspruch 7 **dadurch gekennzeichnet,**
**dass** jeweils zwei eine V-förmige Anordnung bildende Filterelemente (10) im Bereich von Falzkanten zweiter Art (16.2) den geringsten Abstand (a) zueinander aufweisen.

11. Kassettenfilter nach Anspruch 8 **dadurch gekennzeichnet,**
**dass** die Falzkanten zweiter Art (16.2) von je zwei aneinander angrenzenden Filterelementen (10) minimal beabstandet sind, insbesondere maximal 3 mm.

12. Kassettenfilter nach Anspruch 8 **dadurch gekennzeichnet,**
**dass** die Falzkanten zweiter Art (16.2) von je zwei aneinander angrenzenden Filterelementen (10) einander berühren.

13. Kassettenfilter nach einem der Ansprüche 7 bis 11 **dadurch gekennzeichnet,**
**dass** je zwei aneinander angrenzende Filterelemente (10) miteinander verklebt (V) sind.

14. Filterpatrone (300) mit einem Boden (30), einem mit einer mittigen Ausnehmung (32) versehenen Deckel (31) und mindestens einem zwischen Deckel (31) und Boden (30) angeordneten Filterelement (10), **dadurch gekennzeichnet,**
**dass** Filterelement (10) nach einem der Ansprüche 1 - 8 ausgeführt ist, und die Gegenfaltung (12, 13, 14) des Filterelements (10) zur Ausnehmung (32) hin orientiert ist.
